# EUROPEAN PATENT SPECIFICATION

(11) **EP 2 747 443 B1**
(45) Date of publication and mention of the grant of the patent: **26.06.2019**
(21) Application number: 12198402.5
(22) Date of filing: 20.12.2012
(51) Int. Cl.: H04N 21/4623, H04N 21/418

(54) **Method to enforce processing of management messages by a security module**
Verfahren zum Bewirken der Verarbeitung der Verwaltung von Nachrichten durch ein Sicherheitsmodul
Procédé pour exécuter le traitement de messages de gestion par un module de sécurité

(43) Date of publication of application: 25.06.2014
(73) Proprietor: Nagravision S.A., 1033 Cheseaux-sur-Lausanne (CH)
(72) Inventor: Fischer, Jean-Bernard, 25370 Rochejean (FR)
(74) Representative: Hoyng Rokh Monegier LLP

(56) References cited:
- WO-A1-2012/110306
- US-A- 5 461 675
- US-A1- 2003 182 579
- US-A1- 2004 101 138
- US-A1- 2006 117 392
- US-A1- 2007 230 700
- US-A1- 2011 188 655
- US-B1- 6 393 562

## Description

### Field of the invention

The invention relates to a method and a system for enforcing processing of management messages by security modules associated to multimedia receivers. In particular, the invention applies to pay TV and aims to render the processing and execution of positive addressing management messages dependent on the anterior processing of other management messages.

### Technical background

In the known standard pay-TV broadcast model, as disclosed in the "EBU Functional Model of a Conditional Access System", EBU technical review, winter 1995, the pay-TV service to be broadcast is encrypted and the keys to decrypt the pay-TV service on the multimedia receiver side are placed in Entitlement Control Messages (ECM) sent together with the scrambled pay-TV service. The ECM messages are encrypted with a transmission key, which is changed frequently for security reasons.

In addition to the descrambling keys, the ECM messages carries information on the pay-TV service conditional access rights in the form of access conditions to be enforced on the multimedia receiver side.

Subscriber conditional access rights (for example a service subscription right for one month), as well as the transmission keys, are managed and transmitted on an asynchronous way in the form of Entitlement Management Messages (EMM). The EMM messages are encrypted with secret keys only known by the multimedia receiver.

For a multimedia receiver to be able to receive and decrypt a service, the first step is therefore to receive and decrypt the EMM messages carrying the rights corresponding to the product as well as the EMM messages carrying the transmission keys necessary to decrypt the ECM messages. For that purpose, the multimedia receiver comprises a unique key and the EMM is encrypted by this unique key and broadcast so that only this multimedia receiver can decrypt the EMM message. For that purpose, symmetric or asymmetric keys can be used.

The multimedia receiver is associated or locally connected to a security module comprising at least one processor and a memory. The security module can have different forms, such as a smartcard, a secure chip, an USB dongle or tamper-resistant software stored in a secure memory of the multimedia receiver.

The security module is considered as secure enough to store in its memory at least the transmission key, the unique key pertaining to the multimedia receiver and access right (or rights) to one or more pay-TV services.

The roles of the security module are to receive the ECM and EMM messages, decrypt the ECM message using the transmission key and extract the access key (or keys) as well as the access conditions related to a selected pay-TV service. The security module checks if the right matching the access conditions contained in the ECM message is present in the memory of the security module and in a positive case, the access key is returned to the multimedia receiver for decrypting the selected service.

An ECM message can contain more that one access condition definition. In this case, according to a policy applied, the security module can check the presence of the rights in its memory and return the access key if at least one of the rights is present. According to another policy, the security module can return the access key only if all the rights matching the whole set of access conditions are present in the memory of the security module.

Document: US2004/0101138A1 discloses a system and a method for secure distribution of digital media content through a packet-based network such as the Internet. The security of the method does not require one-to-one key exchange, but rather enables keys, and/or information required in order to build the key, to be broadcast through the packet-based network. The digital media content is then also preferably broadcast, but cannot be accessed without the proper key. However, preferably only authorized end-user devices are able to access the digital media content, by receiving and/or being able to access the proper key. Thus, the system or method is useful for other types of networks in which digital media content is more easily broadcast rather than unicast, in addition to packet-based networks. ECM is broadcast to all end user devices, but the particular end user device is more preferably only able to generate the key if this end user device also receives an EMM from broadcaster head end. The EMM is optionally and more preferably used for periodic renewal of security module, such that without periodic receipt of such an EMM, security module eventually is no longer able to access the media content, because it is no longer able to use the ECM information to generate the key for decrypting the media content. The EMM may be sent to a plurality of different end user devices at one time, as a broadcast or multicast, such that a group of end user devices would receive the information at once. For example, a particular EMM could be designated for one group of end user devices, according to a particular subscription plan or other type of payment structure, and/or according to the network address of the members of the group of end user devices. A preferred feature of EMMs is an authorization period, such that EMMs are preferably only valid for the authorization period, after which a new EMM must be received. Thus, the security information is still renewed, while also supporting access of authorized end users to the media content, even in a non-reliable network environment such as the Internet.

Document US2008/0059993A1 discloses subscriber authorization system including: an authorization management system, configured to transmit, through multicasting, an authorization message EMM to a plurality of terminals on a transmission network, wherein the EMM carries a multicast address, a product identity and authorization data. Before transmitting the EMM to authorize the subscribers, a multicast address of a group is determined. Because every card has a unique card address, a number of cards with a common address attribute are set in the group. During the authorization process concerning a product, the authorization management system encapsulates authorization data, a product identity and the multicast address into an EMM and transmits the EMM to terminal devices of subscribers through group-based multicast. A terminal device of a subscriber belonging to the group identified by the EMM parses the authorization message upon receiving the EMM, obtains information of whether the subscriber has subscribed to the product and performs authorization on the subscriber according to the information of whether the subscriber has subscribed to the product.

According to these methods, the EMM messages are sent for updating rights in the security module. Only ECM processing is conditioned by the processing of an EMM as usual in known user devices.

Document EP1212879B1, discloses a process and a transmission system of chain of database updating messages between a managing centre and a plurality of subscriber databases geographically shared. Each message includes a chain identifier and a chain index allowing the identification of the message in the chain. If a message is not received following interference in the connection, the processing of further messages can cause the locking of databases. In order to avoid this drawback, the solution consists in adding to each message a condition block which determines if this message has to be processed without reference to elements of the chain or which are the conditions linked to the previous processing of elements of the chain.

The particularity of each message is that it contains only a part of the data intended to the database; two cases are possible:
- the order of message reception plays an important role and each message has to follow the preceding one.
- the order of reception do not play any role and the messages are executed at reception.

In this document all messages of the chain are sent according to a same mode: either broadcast, multicast or upon request from the subscriber unit.

At present, when reception of a global EMM message by all security modules has to be enforced for security reasons, a ECM-related key is changed if the processing of the EMM message has given a result such as a data segment change in the security module memory or a new version of a piece of software. Global key change may be a risky operation and is problematic whenever multimedia receivers are disconnected. In this case, the reception of a new key by the security module can take a long time, so that the user may call the managing center and trigger an immediate update, which is an expensive operation.

Document WO2012/110306A1 discloses a method to optimize reception of entitlement management messages EMMs in a subscriber unit belonging to a Pay-TV system. The subscriber units are set up to a default reception channel for receiving default entitlement management messages EMMs or global entitlement management messages G-EMMs addressed to all or a group of subscriber units controlled by the management system. When one or a plurality of operating parameters of a specific subscriber unit needs to be modified, the security module sends an information signal to the subscriber unit, which switches to a specific reception channel. In this case only specific entitlement management messages, also called positive addressing entitlement management messages PA-EMMs, are received for performing the operating parameters modification of the concerned subscriber units. Once the modification is executed, the subscriber unit switches back to the default reception channel to be ready for receiving default entitlement management messages again.

Document US6393562B1 discloses a method of preventing fraudulent access in a conditional access system which is linked to a subscriber's receiver/decoder for receiving an entitlement management message (EMM) for a group of subscribers to enable said system to provide access for a respective subscriber. The method includes the step of programming the receiver/decoder only to accept a current EMM of a current calendar period if it has received at least a previous EMM of a previous calendar period. The method preferably further comprises the steps of transmitting redundant date information with the current EMM; and receiving the current EMM and using redundant date information to check whether said previous EMM has been received. Each EMM may contains rights date information concerning a current right of access and corresponding check date information concerning a previous right of access, such check date information constituting the redundant date information.

### Summary of the invention

The invention aims to overcome the drawbacks of the known methods of verifying correct reception and execution of management messages by a security module by avoiding risky key changes while simplifying, still in a secure way, global updates of multimedia receiver's security modules.

The aims are achieved by a method to enforce processing of management messages by a security module associated to a multimedia receiver configured to receive broadcast access controlled multimedia services, the management messages received from a managing center by the multimedia receiver being processed by the security module, the method comprising steps of:
- receiving by the security module of the multimedia receiver at least one global management message addressed to a plurality of multimedia receivers operated by the managing center,
- tracing the processing of said global management message by setting parameters in a memory of the security module,
- receiving by the security module of the multimedia receiver at least one positive addressing management message addressed to said security module,
- checking, by the security module, anterior processing of the global management message through the value of the parameters set during tracing the processing of the global message,
- processing the positive addressing management message only if previous checking gives a result indicating a successful processing of the global management message allowing the multimedia receiver accessing the broadcast multimedia services.

The processing of positive addressing (PA) management messages also called specific management messages is conditioned by the processing of the global management messages addressed to all receivers.

So until the global management message has been processed, the positive addressing operations are blocked by the security module. When the period of validity of the rights normally renewed by the PA expires, the security module will stop granting access to the corresponding services, as per the usual PA mechanism.

As soon as the global management message has been processed, the next PA management message will be processed normally and access to the services will be renewed.

A positive addressing message comprises at least an identifier of the security module to which the message is addressed. In practical cases, in order to transmit to several security modules the same message, it contains a plurality of security module identifiers structured in a table so that each identifier is associated to commands and parameters for setting up access rights in the concerned security module. At reception of the positive addressing message by the security module, the identifiers included in the message are compared with the identifier of the concerned security module and when a match is found, the related commands are executed as for example an extension of a service expiry date. According to the method of the invention, the expiry date is thus extended only if the processing of global messages (addressed to all multimedia receivers) has let a trace such as an activated flag or a particular state in a register or a memory of the security module.

The positive addressing is performed in function of the security modules and not in function of the parameters and / or rights contained in the security module whatever their values are. In an example of configuration, the global EMMs are sent every 10 minutes while the positive addressing EMMs are sent every week.

### Brief description of the figures

The invention will be better understood with the following detailed description, which refers to the attached figure given as a non-limitative example.

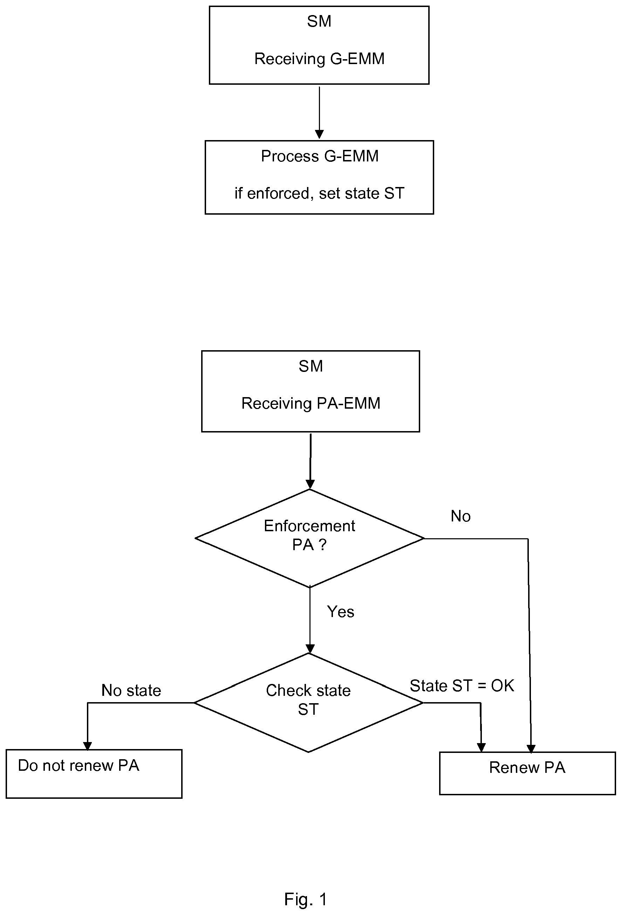

Figure 1 shows a block diagram including steps performed by the security module to enforce processing of management messages according to the method of the invention.

### Detailed description of the invention

The method of the invention uses standard mechanisms present in most of the security modules in a new way. The processing of the positive addressing management messages PA-EMMs or specific management messages depends on conditions set by global management messages G-EMMs that shall be enforced.

The term "enforce" means here impose processing of given G-EMMs to set up access conditions or rights in a security module according to a purchased subscription, i.e. PA-EMMs have no effect as long as the G-EMMs are not executed.

According to an example, the positive addressing PA mechanism gives to the security module SM a predetermined period of authorized working capability; this authorization is renewed regularly to ensure an honest paying subscriber is receiving his purchased services. Normally, when a subscriber buys a service, an EMM is sent to his security module to grant the rights. When he unsubscribes a service, a cancellation EMM is sent to remove the rights. If a dishonest subscriber buys long term subscriptions and, after reception of management messages EMMs granting access to services, blocks all further EMMs and cancels his subscriptions, he will never get the cancellation EMMs and would have access to the services forever.

With the positive addressing management messages mechanism, the rights are granted only for a limited period and a PA-EMM is sent regularly to renew the rights, so that if all EMMs are blocked, the rights will expire after this period and the security module SM will stop processing entitlement control messages ECM carrying control words necessary to descramble the services.

According to a preferred embodiment, at least one positive addressing management messages PA-EMM is broadcast at the end of a sequence of global EMMs G-EMM which have to be first processed before processing the PA-EMM. The managing center MC prepares a sequence comprising one or more global EMMs G-EMMs followed by one or more PA-EMMs which will be recognized under condition that the global EMMs have been processed. The PA-EMMs may be addressed to one particular multimedia receiver MR but in general they are preferably addressed to a predefined group of multimedia receivers. The sequence may also comprise in addition to the global EMMs, a plurality of PA-EMMs addressed to a group of multimedia receivers as well as to individual receivers. A group of multimedia receivers MR may be defined by a location code, a portion of a network address or a portion of an identifier of the security module or the receiver itself, etc.

The block diagram of figure 1 illustrates the method of the invention wherein a security module SM associated to a multimedia receiver MR receives global management messages G-EMMs and positive addressing management messages PA-EMMs. The global EMMs G-EMM are enforced by processing the PA EMMs only if conditions set by the G-EMMs are fulfilled. According to a preferred configuration, the processing of the global management messages G-EMMs sets up a state ST of the security module SM defining a successful ST = OK or an unsuccessful processing of the G-EMMs letting no trace i.e. no state, or a partial trace showing only part of the G-EMMs where processed.

In case of state ST = OK, the positive addressing management messages PA-EMMs are processed to renew in the security module SM specific parameters related to access rights. The services purchased by the user are therefore fully accessible according to the stored rights specific to the security module SM.

When the processing of the G-EMMs lets no trace or provides no effect, the access to the broadcast services subjected to the PA is either denied or restricted as dictated by the PA policy. Two solutions may be possible to re-establish the access:
1) redo the regular process by waiting the next global and positive addressing messages G-EMM, PA-EMM or
2) settle and/or update subscription at the managing center MC which will address the necessary EMMs to the multimedia receivers MR for renewing the access rights in the security module SM.

According to an embodiment, the parameters previously set by the G-EMMs are compared with the parameters carried by the PA-EMMs. A positive result of the comparison indicates that the G-EMMs have been successfully enforced. A negative result of the comparison will have the same consequences than a trace absence of the preceding embodiment.

Besides access rights, the EMMs may also comprise parameters such as those related to an anti-splitter module configured to detect the distribution of control words to other receivers. In fact, one possible way to enjoy access to service encrypted data without being authorized consists in using a genuine multimedia receiver with a real security module, but distributing the control words to a set of multimedia receivers. This can be done by means of a server or separating device known as a "splitter". Therefore, the amounts related to the acquisition of access rights to encrypted data are paid by a single multimedia receiver while the services are accessible from several multimedia receivers.

Data related to an update of the security module software from a current version to a new version or other security operating data of the security module may also be comprised in the parameters.

When some condition that is currently accessible has to be enforced by the conditional PA-EMM mechanism (G-EMMs and PA-EMMs), such as data segments in the memory of the security module or its software version, the method of the invention becomes advantageous. For example when a software update patch that brings the security module to a given higher version has to be enforced, it will be sufficient to condition the EMMs to this higher version or to a higher one.

An additional advantage of using the PA-EMM mechanism is that a grace period principle is introduced by using PA-EMMs, i.e. the fact that the date in the PA-EMM is relatively far in the future even though the PA-EMMs renewal frequency is shorter: for example, if the PA-EMMs are renewed every 20 days, the date itself is pushed 2 months in the future, so that when a user comes back from a 4 weeks holiday during which the multimedia receiver was switched off, the dates set by the PA-EMMs previously received are still valid at switching on the multimedia receiver and he will receive the enforced G-EMMs and the new PA-EMMs before expiration of the date.

In order to prevent filtering the global management messages G-EMMs which successful processing let a trace or a state (ST) allowing PA-EMMs processing, the state (ST) may be reset after the PA-EMMs have been processed. In this case, the next G-EMMs successful processing will renew the state (ST) necessary for the PA-EMMs processing and so on. When several PA-EMMs are transmitted in a sequence for example, only the last PA-EMM will reset the state (ST).

Another way to reset the trace or the state (ST) is to limit its life time by setting a predefined time period after which the state (ST) is reset, either by a parameter in the G-EMMs or by a timer set up in the security module upon reception of the G-EMMs.

The time period depends on the periodicity of the PA-EMMs. Its duration is defined so that the state (ST) remains at least until reception of the positive addressing management message (PA-EMM).

In a preferred application of the method of the invention, the PA-EMM sent at the initialization of a new security module would not be conditioned, so that there is no impact on a new subscriber. However, the subscriber will still have to get the global G-EMMs enforced before the end of PA-EMMs reception or his PA-EMMs will not be prolonged. The subscriber gets one PA period to acquire the enforced EMMs. A new security module SM is thus configured in such a way that it possesses an initial state STO = OK corresponding to the state ST = OK reached by a successful execution of global management messages G-EMM in a security module in service. This state ST0 = OK will allow a successful enforcement of a PA-EMM transmitted by the managing center MC.

According to a further application example, the PA-EMMs can be used to extend the service authorization period for paid services stored on a security module of a subscriber. This can be accomplished by pushing the expiration date forward in time by generating PA-EMMs for each service and sending them to the concerned multimedia unit by individual addressing or group addressing.

## Claims

1. A method to enforce processing of management messages (EMM) by a security module (SM) associated to a multimedia receiver (MR) configured to receive access controlled multimedia services, the management messages (EMM) received from a managing center(MC) by the multimedia receiver (MR) and being processed by the security module (SM), the method comprising steps of:
receiving by the security module (SM) at least one global management message (G-EMM) addressed to all multimedia receivers (MR) operated by the managing center(MC),
tracing by the security module (SM) the processing of said at least one global management message (G-EMM) by setting up a state (ST) in a memory of the security module (SM), the state (ST) defining a successful processing of the at least one global management message (G-EMM) while an unsuccessful processing of said at least one global management message (G-EMM) results in an absence of the state (ST),
receiving by the security module (SM) at least one positive addressing management message (PA-EMM) specifically addressed to a predefined group of multimedia receivers (MR) including said security module (SM), said predefined group being part of the multimedia receivers (MR) operated by the managing center(MC), the at least one positive addressing management message (PA-EMM) comprising an identifier of the security module (SM) associated with commands and parameters for setting up in said security module (SM) access rights to multimedia services,
checking, by the security module (SM), anterior processing of the at least one global management message (G-EMM) through the state (ST) set up during tracing of the processing of the at least one global management message (G-EMM),
processing the at least one positive addressing management message (PA-EMM) only if the state (ST) set up during tracing of the processing of the at least one global management message (G-EMM) indicates a successful processing of the at least one global management message (G-EMM), thereby allowing the multimedia receiver (MR) access to multimedia services, the state being reset only after processing a last one of the at least one positive addressing management message, said state being renewed after successful processing of a next at least one global management message.

2. Method according to claim 1 **characterized in that** in case of a state absence indicating an unsuccessful enforcement of the at least one global management message (G-EMM), the access to the access controlled multimedia services is either denied or restricted to global access rights and parameters.

3. Method according to claim 1 **characterized in that** a new security module (SM) is configured in such a way that an initial state (STO) of said new security module (SM) corresponds to the state (ST) reached by a successful execution of the at least one global management message (G-EMM), said initial state (STO) allowing a successful enforcement of the at least one positive addressing management message (PA-EMM) transmitted by the managing center(MC).

4. Method according to claim 1 **characterized in that** the security module (SM) of the multimedia receiver (MR) receives a sequence of management messages (EMM) comprising at least two global management messages (G-EMM).

5. Method according to claim 4 **characterized in that** the at least one positive addressing management message (PA-EMM) is processed by the security module (SM) only if all the global management messages (G-EMM) of the sequence are processed successfully.

6. A security module (SM) configured to enforce processing of management messages (EMM), the security module (SM) being associated to a multimedia receiver (MR) configured to receive access controlled multimedia services and the management messages (EMM) from a managing center(MC), the security module (SM) comprising a processor, and a memory connected to the processor, the security module being further configured to:
receive at least one global management message (G-EMM) addressed to all multimedia receivers (MR) associated with the managing center(MC),
trace the processing of at least one global management message (G-EMM) by setting up a state (ST) in the memory, the state (ST) defining a successful processing of the at least one global management message (G-EMM) while an unsuccessful processing of said at least one global management message (G-EMM) results in an absence of the state (ST),
receive at least one positive addressing management message (PA-EMM) specifically addressed to a predefined group of multimedia receivers (MR) including said security module (SM), said predefined group being part of the multimedia receivers (MR) operated by the managing center(MC), the at least one positive addressing management message (PA-EMM) comprising an identifier of the security module (SM) associated with commands and parameters for setting up in said security module (SM) access rights to access controlled multimedia services,
check anterior processing of the at least one global management message (G-EMM) through the state (ST) set up during tracing of the processing of the at least one global management message (G-EMM), and
process the at least one positive addressing management message (PA-EMM) only if the state (ST) set up during tracing of the processing of the at least one global management message (G-EMM) indicates a successful processing of the at least one global management message (G-EMM, thereby allowing the multimedia receiver (MR) access to multimedia services, the state being reset only after processing a last one of at least one positive addressing management message, said state being renewed after successful processing of a next at least one global management message.

7. Security module according to claim 6 **characterized in that** the absence of the state indicating an unsuccessful enforcement of the at least one global management message (G-EMM) results in denial of access to the access controlled multimedia services or in an access restricted to global access rights and parameters.

8. Security module according to claim 6 **characterized in that**, during an initialization phase of the security module (SM), an initial state is set up, said initial state corresponding to the state reached by a successful execution of the at least one global management message (G-EMM), said initial state allowing a successful enforcement of at least one positive addressing management message (PA-EMM) transmitted by the managing center(MC).

9. Security module according to claim 6 further configured to receive a sequence of management messages (EMM) comprising at least two global management messages (G-EMM).

10. Security module according to claim 9 further configured to process the at least one positive addressing management message (PA-EMM) only if all the global management messages (G-EMM) of the sequence are processed successfully.

## Patentansprüche

1. Verfahren zum Bewirken der Verarbeitung von Verwaltungsnachrichten (EMM) durch ein Sicherheitsmodul (SM), das einem Multimedia-Empfänger (MR) zugeordnet ist, der dazu ausgelegt ist, zugriffsgesteuerte Multimedia-Dienste zu empfangen, wobei die Verwaltungsnachrichten (EMM) von einer Verwaltungszentrale (MC) durch den Multimedia-Empfänger (MR) empfangen werden und durch das Sicherheitsmodul (SM) verarbeitet werden, wobei das Verfahren die Schritte umfasst von:
Empfangen mindestens einer globalen Verwaltungsnachricht (G-EMM) durch das Sicherheitsmodul (SM), die an alle Multimedia-Empfänger (MR) adressiert ist, die von der Verwaltungszentrale (MC) betrieben werden,
Verfolgen der Verarbeitung der mindestens einen globalen Verwaltungsnachricht (G-EMM) durch das Sicherheitsmodul (SM) durch Einrichten eines Zustands (ST) in einem Speicher des Sicherheitsmoduls (SM), wobei der Zustand (ST) eine erfolgreiche Verarbeitung der mindestens einen globalen Verwaltungsnachricht (G-EMM) definiert, während eine erfolglose Verarbeitung der mindestens einen globalen Verwaltungsnachricht (G-EMM) zu einer Abwesenheit des Zustands (ST) führt,
Empfangen mindestens einer positiven Adressierungsverwaltungsnachricht (PA-EMM) durch das Sicherheitsmodul (SM), die speziell an eine vordefinierte Gruppe von Multimedia-Empfängern (MR) adressiert ist, die das Sicherheitsmodul (SM) umfasst, wobei die vordefinierte Gruppe Teil der Multimedia-Empfänger (MR) ist, die von der Verwaltungszentrale (MC) betrieben werden, wobei die mindestens eine positive Adressierungsverwaltungsnachricht (PA-EMM) eine Kennung des Sicherheitsmoduls (SM) umfasst, die Befehlen und Parametern zum Einrichten von Zugriffsrechten auf Multimedia-Dienste in dem Sicherheitsmodul (SM) zugeordnet ist,
Überprüfen der vorherigen Verarbeitung der mindestens einen globalen Verwaltungsnachricht (G-EMM) durch das Sicherheitsmodul (SM) durch den Zustand (ST), der während der Verfolgung der Verarbeitung der mindestens einen globalen Verwaltungsnachricht (G-EMM) eingerichtet wird,
Verarbeiten der mindestens einen positiven Adressierungsverwaltungsnachricht (PA-EMM) nur dann, wenn der während der Verfolgung der Verarbeitung der mindestens einen globalen Verwaltungsnachricht (G-EMM) eingerichtete Zustand (ST) eine erfolgreiche Verarbeitung der mindestens einen globalen Verwaltungsnachricht (G-EMM) angibt, wodurch dem Multimedia-Empfänger (MR) der Zugriff auf Multimedia-Dienste ermöglicht wird, wobei der Zustand erst nach der Verarbeitung einer letzten der mindestens einen positiven Adressierungsverwaltungsnachricht rückgesetzt wird, wobei der Zustand nach erfolgreicher Verarbeitung einer nächsten mindestens einen globalen Verwaltungsnachricht erneuert wird.

2. Verfahren nach Anspruch 1, **dadurch gekennzeichnet, dass** bei Abwesenheit eines Zustands, der eine erfolglose Bewirkung der mindestens einen globalen Verwaltungsnachricht (G-EMM) angibt, der Zugriff auf die zugriffsgesteuerten Multimedia-Dienste entweder verweigert oder auf globale Zugriffsrechte und Parameter beschränkt wird.

3. Verfahren nach Anspruch 1, **dadurch gekennzeichnet, dass** ein neues Sicherheitsmodul (SM) so ausgelegt ist, dass ein Anfangszustand (STO) des neuen Sicherheitsmoduls (SM) dem Zustand (ST) entspricht, der durch eine erfolgreiche Ausführung der mindestens einen globalen Verwaltungsnachricht (G-EMM) erreicht wird, wobei der Anfangszustand (STO) eine erfolgreiche Bewirkung der mindestens einen positiven Adressierungsverwaltungsnachricht (PA-EMM) ermöglicht, die von der Verwaltungszentrale (MC) gesendet wird.

4. Verfahren nach Anspruch 1, **dadurch gekennzeichnet, dass** das Sicherheitsmodul (SM) des Multimedia-Empfängers (MR) eine Sequenz von Verwaltungsnachrichten (EMM) empfängt, die mindestens zwei globale Verwaltungsnachrichten (G-EMM) umfasst.

5. Verfahren nach Anspruch 4, **dadurch gekennzeichnet, dass** die mindestens eine positive Adressierungsverwaltungsnachricht (PA-EMM) von dem Sicherheitsmodul (SM) nur dann verarbeitet wird, wenn alle globalen Verwaltungsnachrichten (G-EMM) der Sequenz erfolgreich verarbeitet werden.

6. Sicherheitsmodul (SM), das dazu ausgelegt ist, die Verarbeitung von Verwaltungsnachrichten (EMM) zu bewirken, wobei das Sicherheitsmodul (SM) einem Multimedia-Empfänger (MR) zugeordnet ist, der dazu ausgelegt ist, zugriffsgesteuerte Multimedia-Dienste und die Verwaltungsnachrichten (EMM) von einer Verwaltungszentrale (MC) zu empfangen, wobei das Sicherheitsmodul (SM) einen Prozessor und einen mit dem Prozessor verbundenen Speicher umfasst, wobei das Sicherheitsmodul ferner ausgelegt ist zum:
Empfangen mindestens einer globalen Verwaltungsnachricht (G-EMM), die an alle Multimedia-Empfänger (MR) adressiert ist, die der Verwaltungszentrale (MC) zugeordnet sind,
Verfolgen der Verarbeitung mindestens einer globalen Verwaltungsnachricht (G-EMM) durch Einrichten eines Zustands (ST) in dem Speicher, wobei der Zustand (ST) eine erfolgreiche Verarbeitung der mindestens einen globalen Verwaltungsnachricht (G-EMM) definiert, während eine erfolglose Verarbeitung der mindestens einen globalen Verwaltungsnachricht (G-EMM) zu einer Abwesenheit des Zustands (ST) führt,
Empfangen mindestens einer positiven Adressierungsverwaltungsnachricht (PA-EMM), die speziell an eine vordefinierte Gruppe von Multimedia-Empfängern (MR) adressiert ist, die das Sicherheitsmodul (SM) beinhaltet, wobei die vordefinierte Gruppe Teil der Multimedia-Empfänger (MR) ist, die von der Verwaltungszentrale (MC) betrieben werden, wobei die mindestens eine positive Adressierungsverwaltungsnachricht (PA-EMM) eine Kennung des Sicherheitsmoduls (SM) umfasst, die Befehlen und Parametern zum Einrichten von Zugriffsrechten auf zugriffsgesteuerte Multimedia-Dienste in dem Sicherheitsmodul (SM) zugeordnet ist,
Überprüfen der vorherigen Verarbeitung der mindestens einen globalen Verwaltungsnachricht (GEMM) durch den Zustand (ST), der während der Verfolgung der Verarbeitung der mindestens einen globalen Verwaltungsnachricht (G-EMM) eingerichtet wird, und
Verarbeiten der mindestens einen positiven Adressierungsverwaltungsnachricht (PA-EMM) nur dann, wenn der während der Verfolgung der Verarbeitung der mindestens einen globalen Verwaltungsnachricht (G-EMM) eingerichtete Zustand (ST) eine erfolgreiche Verarbeitung der mindestens einen globalen Verwaltungsnachricht (G-EMM) angibt, wodurch dem Multimedia-Empfänger (MR) der Zugriff auf Multimedia-Dienste ermöglicht wird, wobei der Zustand erst nach der Verarbeitung einer letzten von mindestens einer positiven Verwaltungsnachricht rückgesetzt wird, wobei der Zustand nach erfolgreicher Verarbeitung einer nächsten mindestens einen globalen Verwaltungsnachricht erneuert wird.

7. Sicherheitsmodul nach Anspruch, **dadurch gekennzeichnet, dass** die Abwesenheit des Zustandes, der eine erfolglose Bewirkung der mindestens einen globalen Verwaltungsnachricht (G-EMM) angibt, zur Verweigerung des Zugangs zu den zugriffsgesteuerten Multimedia-Diensten oder zu einem auf globale Zugriffsrechte und Parameter beschränkten Zugang führt.

8. Sicherheitsmodul nach Anspruch 6, **dadurch gekennzeichnet, dass** während einer Initialisierungsphase des Sicherheitsmoduls (SM) ein Anfangszustand eingerichtet wird, der dem Zustand entspricht, der durch eine erfolgreiche Ausführung der mindestens einen globalen Verwaltungsnachricht (G-EMM) erreicht wird, wobei der Anfangszustand eine erfolgreiche Bewirkung mindestens einer von der Verwaltungszentrale (MC) gesendeten positiven Adressierungsverwaltungsnachricht (PA-EMM) ermöglicht.

9. Sicherheitsmodul nach Anspruch 6, das ferner zum Empfangen einer Sequenz von Verwaltungsnachrichten (EMM) ausgelegt ist, die mindestens zwei globale Verwaltungsnachrichten (GEMM) umfasst.

10. Sicherheitsmodul nach Anspruch 9, das ferner dazu ausgelegt ist, die mindestens eine positive Adressierungsverwaltungsnachricht (PA-EMM) nur dann zu verarbeiten, wenn alle globalen Verwaltungsnachrichten (G-EMM) der Sequenz erfolgreich verarbeitet werden.

## Revendications

1. Procédé pour exécuter le traitement de messages de gestion (EMM) par un module de sécurité (SM) associé à un récepteur multimédia (MR) configuré pour recevoir des services multimédias à accès contrôlé, les messages de gestion (EMM) étant reçus en provenance d'un centre de gestion (MC) par le récepteur multimédia (MR) et étant traités par le module de sécurité (SM), le procédé comprenant les étapes suivantes :
recevoir, par le module de sécurité (SM), au moins un message de gestion global (G-EMM) adressé à tous les récepteurs multimédias (MR) commandés par le centre de gestion (MC),
suivre, par le module de sécurité (SM), le traitement dudit au moins un message de gestion global (G-EMM) par configuration d'un état (ST) dans une mémoire du module de sécurité (SM), l'état (ST) définissant un traitement réussi de l'au moins un message de gestion global (G-EMM) alors qu'un traitement non réussi dudit au moins un message de gestion global (G-EMM) conduit à une absence de l'état (ST),
recevoir, par la module de sécurité (SM), au moins un message de gestion à adressage positif (PA-EMM) spécifiquement adressé à un groupe prédéfini de récepteurs multimédias (MR) comprenant ledit module de sécurité (SM), ledit groupe prédéfini faisant partie des récepteurs multimédias (MR) commandés par le centre de gestion (MC), l'au moins un message de gestion à adressage positif (PA-EMM) comprenant un identifiant du module de sécurité (SM) associé à des instructions et à des paramètres pour la configuration, dans ledit module de sécurité (SM), de droits d'accès à des services multimédias,
vérifier, par le module de sécurité (SM), un traitement antérieur de l'au moins un message de gestion global (G-EMM) à travers l'état (ST) configuré pendant le suivi du traitement de l'au moins un message de gestion global (G-EMM),
traiter l'au moins un message de gestion à adressage positif (PA-EMM) uniquement si l'état (ST) configuré pendant le suivi du traitement de l'au moins un message de gestion global (G-EMM) indique un traitement réussi de l'au moins un message de gestion global (G-EMM), permettant ainsi l'accès du récepteur multimédia (MR) à des services multimédias, l'état étant réinitialisé uniquement après le traitement d'un dernier de l'au moins un message de gestion à adressage positif, ledit état étant renouvelé après le traitement réussi d'un au moins un message de gestion global suivant.

2. Procédé selon la revendication 1, **caractérisé par le fait que**, dans le cas d'une absence d'état indiquant une exécution non réussie de l'au moins un message de gestion global (G-EMM), l'accès aux services multimédias à accès contrôlé est soit refusé, soit restreint à des droits et paramètres d'accès globaux.

3. Procédé selon la revendication 1, **caractérisé par le fait qu'**un nouveau module de sécurité (SM) est configuré d'une manière telle qu'un état initial (STO) dudit nouveau module de sécurité (SM) correspond à l'état (ST) atteint par une exécution réussie de l'au moins un message de gestion global (G-EMM), ledit état initial (STO) permettant une exécution réussie de l'au moins un message de gestion à adressage positif (PA-EMM) transmis par le centre de gestion (MC).

4. Procédé selon la revendication 1, **caractérisé par le fait que** le module de sécurité (SM) du récepteur multimédia (MR) reçoit une séquence de messages de gestion (EMM) comprenant au moins deux messages de gestion globaux (G-EMM).

5. Procédé selon la revendication 4, **caractérisé par le fait que** l'au moins un message de gestion à adressage positif (PA-EMM) est traité par le module de sécurité (SM) uniquement si tous les messages de gestion globaux (G-EMM) de la séquence sont traités avec succès.

6. Module de sécurité (SM) configuré pour exécuter un traitement de messages de gestion (EMM), le module de sécurité (SM) étant associé à un récepteur multimédia (MR) configuré pour recevoir des services multimédias à accès contrôlé et les messages de gestion (EMM) à partir d'un centre de gestion (MC), le module de sécurité (SM) comprenant un processeur, et une mémoire reliée au processeur, le module de sécurité étant en outre configuré pour :
recevoir au moins un message de gestion global (G-EMM) adressé à tous les récepteurs multimédias (MR) associés au centre de gestion (MC),
suivre le traitement d'au moins un message de gestion global (G-EMM) par configuration d'un état (ST) dans la mémoire, l'état (ST) définissant un traitement réussi de l'au moins un message de gestion global (G-EMM) alors qu'un traitement non réussi dudit au moins un message de gestion global (G-EMM) conduit à une absence de l'état (ST),
recevoir au moins un message de gestion à adressage positif (PA-EMM) spécifiquement adressé à un groupe prédéfini de récepteurs multimédias (MR) comprenant ledit module de sécurité (SM), ledit groupe prédéfini faisant partie des récepteurs multimédias (MR) commandés par le centre de gestion (MC), l'au moins un message de gestion à adressage positif (PA-EMM) comprenant un identifiant du module de sécurité (SM) associé à des instructions et à des paramètres pour la configuration, dans ledit module de sécurité (SM), de droits d'accès à des services multimédias à accès contrôlé,
vérifier un traitement antérieur de l'au moins un message de gestion global (G-EMM) à travers l'état (ST) configuré pendant le suivi du traitement de l'au moins un message de gestion global (G-EMM), et
traiter l'au moins un message de gestion à adressage positif (PA-EMM) uniquement si l'état (ST) configuré pendant le suivi du traitement de l'au moins un message de gestion global (G-EMM) indique un traitement réussi de l'au moins un message de gestion global (G-EMM), permettant ainsi l'accès du récepteur multimédia (MR) aux services multimédias, l'état étant réinitialisé uniquement après le traitement d'un dernier d'au moins un message de gestion à adressage positif, ledit état étant renouvelé après le traitement réussi d'un au moins un message de gestion global suivant.

7. Module de sécurité selon la revendication 6, **caractérisé par le fait que** l'absence de l'état indiquant une exécution non réussie de l'au moins un message de gestion global (G-EMM) conduit à un refus de l'accès aux services multimédias à accès contrôlé ou à un accès restreint aux droits et paramètres d'accès globaux.

8. Module de sécurité selon la revendication 6, **caractérisé par le fait que**, pendant une phase d'initialisation du module de sécurité (SM), un état initial est configuré, ledit état initial correspondant à l'état atteint par une exécution réussie de l'au moins un message de gestion global (G-EMM), ledit état initial permettant une exécution réussie d'au moins un message de gestion à adressage positif (PA-EMM) transmis par le centre de gestion (MC).

9. Module de sécurité selon la revendication 6, configuré en outre pour recevoir une séquence de messages de gestion (EMM) comprenant au moins deux messages de gestion globaux (G-EMM).

10. Module de sécurité selon la revendication 9, configuré en outre pour traiter l'au moins un message de gestion à adressage positif (PA-EMM) uniquement si tous les messages de gestion globaux (G-EMM) de la séquence sont traités avec succès.
